(19) Europäisches Patentamt
European Patent Office
Office européen des brevets

(11) EP 2 255 020 B1

(12) **FASCICULE DE BREVET EUROPEEN**

(45) Date de publication et mention
de la délivrance du brevet:
**28.11.2018 Bulletin 2018/48**

(21) Numéro de dépôt: **09734027.7**

(22) Date de dépôt: **20.03.2009**

(51) Int Cl.:
***B23K 35/02*** *(2006.01)*    ***C21C 7/00*** *(2006.01)*
***B23K 35/368*** *(2006.01)*

(86) Numéro de dépôt international:
**PCT/FR2009/050481**

(87) Numéro de publication internationale:
**WO 2009/130428 (29.10.2009 Gazette 2009/44)**

(54) **FIL FOURRE COMPRENANT DU TRIOXYDE DE MOLYBDENE**

FÜLLDRAHT MIT EINEM MOLYBDÄNTRIOXID

FLUX-CORED WIRE INCLUDING MOLYBDENUM TRIOXIDE

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **20.03.2008 FR 0851804**

(43) Date de publication de la demande:
**01.12.2010 Bulletin 2010/48**

(73) Titulaire: **AFFIVAL**
**59730 Solesmes (FR)**

(72) Inventeurs:
• **POULAILLON, André**
**F-48200 Les Bessons (FR)**
• **GERARDIN, Sébastien**
**F-57000 Metz (FR)**

(74) Mandataire: **Lavoix**
**2, place d'Estienne d'Orves**
**75441 Paris Cedex 09 (FR)**

(56) Documents cités:
**EP-A- 0 030 043    WO-A-2006/008450
JP-A- 1 025 938    JP-A- 56 029 652**

**Description**

L'invention concerne un fil fourré comportant comme matière de remplissage un mélange de poudres d'une part de trioxyde de molybdène (MoO$_3$) et d'autre part d'au moins un élément réducteur tels que Carbone (C), Aluminium (Al) ou Silicium (Si) dans des proportions judicieusement déterminées, lequel fil fourré est ajouté dans des bains métalliques en fusion (notamment des bains d'aciers liquides) pour en augmenter leur teneur en molybdène. L'invention a trait également à un procédé d'élaboration d'acier riche en molybdène au moyen dudit fil fourré.

Le molybdène est largement utilisé dans les aciers dits de construction. Il contribue à modifier les caractéristiques mécaniques des aciers (augmentation de la trempabilité, de la stabilité à haute température, de la résistance à l'usure, l'aptitude à la nitruration...). Le molybdène métallique (pur) est un matériau dit réfractaire dont la température de fusion est très élevée (2617°C).

Cette température est incompatible avec celles généralement rencontrées dans les procédés d'élaboration des aciers en phase liquide (où elles sont voisines de 1600°C) pour permettre une bonne mise en solution dans l'acier; en conséquence le molybdène n'est jamais utilisé à l'état pur. On sait de plus que le coût de cette matière première (le molybdène pur) est très élevé et rédhibitoire pour ce type d'utilisation. Pour ces raisons, l'addition de l'élément Mo dans l'acier liquide est réalisée à partir de composés de molybdène dont les températures de fusion ou de décomposition sont beaucoup plus faibles. Il s'agit des composés tels que:

- l'oxyde de molybdène (MoO$_3$), généralement utilisé en aciérie sous forme de briquettes. Dans ce cas, le MoO$_3$ est ajouté obligatoirement dans le four de fusion pendant une phase réductrice. Cette pratique nécessite des corrections de la teneur finale en Mo de l'acier en aval du procédé juste avant la solidification. JP-A-56029652 propose une variante de ce mode opératoire dans laquelle du FeSi est mélangé au MoO$_3$.
- le ferro-alliage Fe-Mo utilisé sous forme de morceaux dont la granulométrie la plus souvent constatée varie de 10 à 50 mm. Les morceaux d'alliage Fe-Mo sont ajoutés au four poche, car cette pratique demande un temps d'élaboration et d'homogénéisation de la composition du bain d'acier liquide relativement long, d'autant plus long que la quantité de Fe-Mo ajouté est importante, afin de permettre une bonne dissolution du molybdène dans l'acier liquide.

Par ailleurs, il est connu du document WO 2006/008450 d'augmenter le contenu en titane d'un bain d'acier liquide au moyen notamment d'un fil fourré 101 comportant un conteneur 201 en forme de tube et un noyau 202 consistant en un mélange des composants suivants : du fer sous forme d'un oxyde, du titane sous forme d'un oxyde et de l'aluminium ou alliage d'aluminium. Lorsque ledit mélange est chauffé (comme c'est la cas lorsque le fil fourré est plongé dans le bain d'acier), les composants réagissent entre eux, conduisant à l'oxydation de l'aluminium et à la production d'un alliage Fe-Ti. Ce dernier présente une température de fusion moins élevée que le titane métallique et va donc mieux se dissoudre dans l'acier liquide. Suivant la dissolution du tube 201 au bout d'un certain temps (variable selon le matériau constituant le tube ainsi que l'épaisseur de celui-ci), l'alliage Fe-Ti va se disperser dans le bain d'acier liquide pour former un alliage avec l'acier, qui comporte du fer et du titane. Les composants présents dans le noyau 202 ont une granulométrie de 3 mm ou moins. Lorsque la taille de ces particules est relativement faible, le temps de réaction (c'est-à-dire le temps nécessaire aux composants présents dans le noyau pour interagir et former le titane métallique) diminue et la température du noyau sera relativement élevée, sachant que cette réaction est exothermique; à l'inverse, lorsque la taille de ces particules est relativement importante (comprise entre 2 et 3 mm), le temps de réaction augmente et la température du noyau sera plus faible que dans le cas précédent. En outre, la température et la pression du noyau 202 varient en fonction du diamètre du tube 201. Par conséquent, la vitesse de réaction au sein du noyau 202 va dépendre de plusieurs facteurs : matériau constituant du tube 201, épaisseur du tube, diamètre du tube, taille des particules. Le bon déroulement du procédé de fabrication d'acier enrichi en titane dépend donc d'une multitude de facteurs, ce qui le rend difficile à contrôler à l'échelle industrielle.

La présente invention vise à pallier les inconvénients précités et a pour but de proposer un nouvel additif qui permet, à la fois, d'augmenter la teneur en molybdène des aciers, d'en réaliser l'addition tardivement durant le procédé d'élaboration des aciers, et d'approcher très précisément la teneur en molybdène finale de l'acier, stipulée par le cahier des charges de l'utilisateur.

A cet effet, l'invention concerne, selon un premier aspect, un fil fourré destiné à charger un bain métallique en fusion, comportant une gaine métallique et une matière de remplissage en poudre, caractérisé en ce que la matière de remplissage est un mélange de poudres d'une part de trioxyde de molybdène et d'autre part d'au moins un élément réducteur, le trioxyde de molybdène étant majoritaire, et en ce que les proportions et granulométries du mélange de poudres sont déterminées en sorte d'obtenir la réduction complète du trioxyde de molybdène dans la gaine métallique lors de l'augmentation de température due à l'introduction du fil fourré dans le bain.

Afin de garantir une réduction complète du trioxyde de molybdène, il est nécessaire d'ajuster judicieusement l'intervalle granulométrique de la poudre de MoO$_3$. La poudre de MoO$_3$ entrant dans la composition du fil fourré selon l'invention présente une répartition granulométrique dans laquelle 100% des particules ont une taille inférieure à 1000 $\mu$m.

Dans un mode de réalisation, l'élément réducteur est une poudre de carbone. Dans d'autres modes de réalisation, ledit élément réducteur est une poudre d'aluminium ou de silicium dont la taille granulométrique est inférieure ou égale à 1500 $\mu$m.

La taille granulométrique des poudres des éléments réducteurs tels que C, Al ou Si varie de 50 à 1500 $\mu$m.

Le mélange des poudres, rigoureusement homogène, est réalisé avant la mise en fil. La répartition granulométrique ainsi obtenue confère au fil fourré des propriétés de remplissage optimales conduisant à une réaction de réduction complète lorsque le fil est introduit dans la poche d'acier liquide.

Ce fil fourré est destiné à être introduit dans les bains de métaux en fusion, notamment des bains d'acier. Suivant l'introduction du fil fourré de l'invention dans le bain de métal en fusion, et selon la nature du ou des éléments réducteurs ajoutés, ont lieu les réactions chimiques de réduction décrites ci-dessous (équations 1, 2 et 3) :

$$MoO_3 + 3\,C \rightarrow [Mo] + 3\,CO \qquad\qquad \text{éq. 1}$$

$$MoO_3 + 2\,Al \rightarrow [Mo] + Al_2O_3 \qquad\qquad \text{éq. 2}$$

$$2\,MoO_3 + 3\,Si \rightarrow 2\,[Mo] + 3\,SiO_2 \qquad\qquad \text{éq. 3}$$

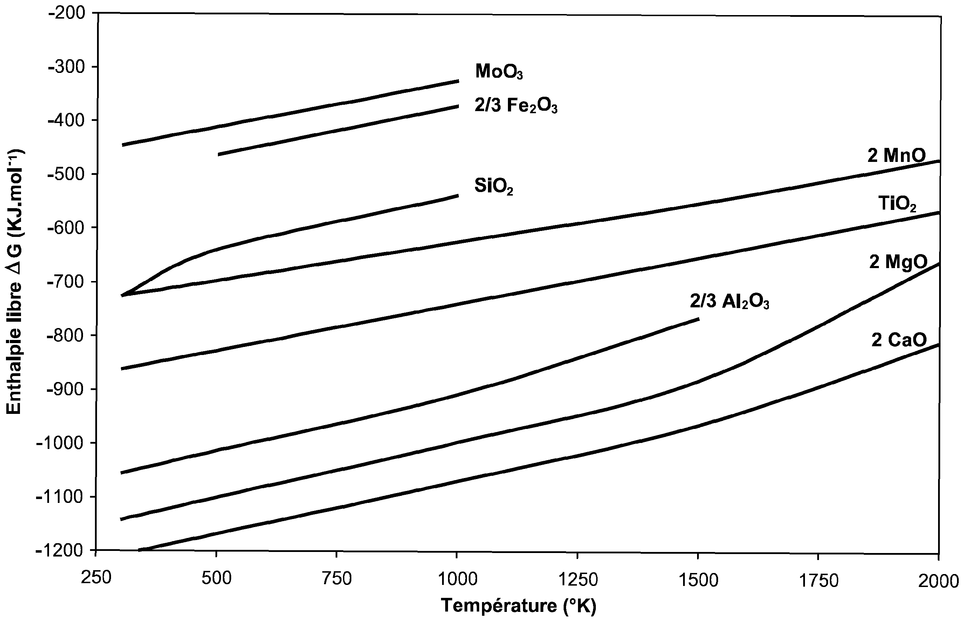

La figure 1 annexée (source : Smithells Metals Reference Book, 7th edition, edited by E.A. Brandes & G.B. Brook, 1992) présente les enthalpies libres de formation de différents oxydes. Il apparaît clairement que le trioxyde de molybdène est facilement réductible. Ainsi, à 1000 K (environ 726°C), les réactions de réduction sont thermodynamiquement stables.

Lors de la fabrication du fil fourré, un soin tout particulier est porté à la liaison intime des deux bords du feuillard métallique qui constituera la gaine enveloppant la matière de remplissage. Dans un mode préféré de réalisation, la gaine métallique est fermée au moyen d'une agrafe, ce qui permet de rendre le réacteur parfaitement étanche. Avantageusement, la gaine métallique est en acier et présente une épaisseur allant de 0,3 à 0,6 mm.

Le mélange de poudres contenu dans le fil fourré décrit dans la présente invention est stoechiométrique ou sur-stoechiométrique, le ou les éléments réducteurs étant en excés. Le tableau 1 ci-après donne les stoechiométries des réactions de réduction précédemment citées.

**Tableau 1**

| Réaction de réduction | Stoechiométrie |
|---|---|
| $MoO_3 + 3\,C \rightarrow [Mo] + 3\,CO$ | 20% masse de Carbone |
| $MoO_3 + 2\,Al \rightarrow [Mo] + Al_2O_3$ | 27,3% masse d'Aluminium |
| $2\,MoO_3 + 3\,Si \rightarrow 2\,[Mo] + 3\,SiO_2$ | 22,6% masse de Silicium |

La sur-stoechiométrie du mélange contenu dans le fil peut varier de 0 à +8% en fonction du procédé sidérurgique.

Selon un deuxième aspect, l'invention concerne un procédé de fabrication d'un acier enrichi en molybdène, comprenant une étape de traitement du bain d'acier liquide consistant en l'introduction dans ledit bain du fil fourré décrit plus haut. Ceci permet d'obtenir la réduction complète du trioxyde de molybdène dans la gaine métallique lors de l'augmentation de température due à l'introduction du fil fourré dans le bain.

Lors de l'injection du fil fourré dans l'acier liquide, la température du mélange de poudre contenu dans celui-ci va rapidement s'élever pour provoquer le déclenchement des réactions de réduction décrites ci-dessus. Le fil fourré se comporte ainsi comme un réacteur chimique dans lequel se fait l'opération de réduction de l'oxyde de molybdène. Ultérieurement, après fusion de la gaine métallique à plus haute température, les produits issus de la réaction vont alors se disperser dans l'acier liquide, à savoir :

- l'élément molybdène va se dissoudre rapidement dans l'acier liquide du fait de la granulométrie fine de la poudre utilisée ;
- les oxydes :

- l'oxyde $SiO_2$ dans le cas où le réducteur utilisé est le silicium,
- l'$Al_2O_3$ lorsque le réducteur est l'aluminium,

vont décanter et vont être piégés dans le laitier de poche ;

- l'oxyde de carbone (CO) libéré lorsqu'on utilise le carbone comme réducteur, augmentera l'intensité du brassage du bain d'acier liquide en poche et ainsi favorisera la mise en solution du molybdène et la décantation des inclusions d'oxydes.

En effet, l'invention offre l'avantage de réduire considérablement le temps de dissolution du Mo dans l'acier liquide grâce à une granulométrie très fine de la poudre utilisée et ainsi d'augmenter la productivité des aciéries. Ce fil fourré peut donc être employé tardivement en poche, en fin d'étape d'élaboration en phase liquide juste avant l'étape de coulée et de solidification du procédé d'élaboration, pour réaliser de très fines corrections de la teneur finale en Mo. L'utilisation d'un tel fil fourré permet également de réduire les risques de déclassements des coulées pour cause de "rendements tardifs" liés à une dissolution incomplète des morceaux.

Le Fe-Mo est une matière première à haute valeur ajoutée et dont le prix peut être très volatile. Les principaux minéraux contenant du molybdène sont la *Molybdénite* ($MoS_2$), la *Wulfénite* ($PbMoO_4$), la *Molybdite* ($FeO_3$, $3MoO_3$ + $H_2O$) et quelques autres minerais sans intérêt économique. Après broyage du minerai et enrichissement par flottation, la molybdénite subit ensuite une opération dite de grillage qui permet d'obtenir le trioxyde de molybdène. Le Fe-Mo est enfin obtenu par réduction métallo-thermique du trioxyde de molybdène.

L'invention sera mieux comprise à la lecture des exemples de réalisation suivants non limitatifs de l'invention. Ces exemples sont réalisés sur deux nuances d'acier dont les compositions finales minimales visées sur métal solide sont données dans le tableau 2 ci-après :

**Tableau 2**

| Nuance d'acier (% en poids) | C | Si | Mn | Ni | Cr | Mo | S |
|---|---|---|---|---|---|---|---|
| 27CrMo4 | 0,270 | 0,250 | 0,750 | 0,200 | 1,100 | 0,200 | 0,025 |
| 17CrNiMo6 | 0,170 | 0,250 | 0,550 | 1,500 | 1,550 | 0,260 | 0,025 |

Exemple 1 :

- Nuance d'acier à élaborer : 27CrMo4;
- Elaboration en poche contenant 90 tonnes d'acier liquide;
- Utilisation d'un fil fourré selon l'invention, de 13 mm de diamètre extérieur, contenant un mélange constitué :

  - de 80% en poids de poudre de $MoO_3$ dont la répartition granulométrique est la suivante:

    - 100% des particules de taille inférieure à 900 $\mu$m
    - 70% des particules de taille égale 500 $\mu$m
    - 10% des particules de taille égale à 100 $\mu$m

  - et de 20% en poids de poudre de carbone dont la répartition granulométrique est :

    - 100% des particules de taille inférieure à 1500 $\mu$m
    - 20% des particules de taille inférieure à 200 $\mu$m;

- Remplissage du fil fourré : 290 gr de mélange de poudre par mètre de fil fourré;
- Teneur en Mo de l'acier liquide mesurée avant injection du fil fourré : 0,166% en poids;
- Longueur de fil fourré injectée : 210 mètres;
- Teneur en Mo de l'acier après injection du fil fourré : 0,202% en poids;
- Rendement d'addition : 100%.

Exemple 2 :

- Nuance d'acier à élaborer : 17CrNiMo6;
- Elaboration en poche contenant 90 tonnes d'acier liquide;
- Utilisation d'un fil selon l'invention fourré de 13mm de diamètre extérieur, contenant un mélange constitué :

  - de 80% en poids de poudre de $MoO_3$ dont la répartition granulométrique est la suivante :

    • 100% des particules de taille inférieure à 900 $\mu$m
    • 70% des particules de taille égale 500 $\mu$m
    • 10% des particules de taille égale à 100 $\mu$m

  - et de 20% en poids de poudre de carbone dont la répartition granulométrique est :

    • 100% des particules de taille inférieure à 1500 $\mu$m
    • 20% des particules de taille inférieure à 200 $\mu$m;

- Remplissage du fil : 290 gr de mélange de poudre par mètre de fil fourré;
- Teneur en Mo de l'acier liquide mesurée avant injection du fil fourré : 0,234% en poids;
- Longueur de fil fourré injectée : 175 mètres;
- Teneur en Mo de l'acier mesurée après injection du fil fourré : 0,264% en poids;
- Rendement d'addition : 100%.

Pour réduire le coût global de fabrication des aciers contenant du molybdène, il est donc particulièrement intéressant pour l'aciériste d'utiliser l'oxyde de molybdène $MoO_3$ (moins cher que le Fe-Mo, car il est issu d'une étape précédente de celle du procédé d'élaboration du Fe-Mo) dans les conditions décrites pour la présente invention.

## Revendications

1. Fil fourré, destiné à charger un bain métallique en fusion, comportant une gaine métallique et une matière de remplissage en poudre, **caractérisé en ce que** :

   i) la matière de remplissage est un mélange de poudres d'une part de trioxyde de molybdène et d'autre part d'au moins un élément réducteur,
   ii) **en ce que** la poudre de trioxyde de molybdène consiste en une fraction granulométrique dans laquelle 100% des particules ont une taille inférieure à 1000 $\mu$m, et
   iii) **en ce que** l'élément réducteur a une granulométrie inférieure ou égale à 1500 $\mu$m ;

   et **en ce que** les proportions de poudres, entre le trioxyde de molybdène d'une part et le ou les éléments réducteurs d'autre part, sont stoechiométriques ou sur-stoechiométriques, le ou les éléments réducteurs étant en excès.

2. Fil fourré selon la revendication 1 dans lequel l'élément réducteur a une granulométrie allant de 50 à 1500 $\mu$m.

3. Fil fourré selon la revendication 1 ou 2 dans lequel l'élément réducteur est une poudre de carbone.

4. Fil fourré selon la revendication 1 ou 2 dans lequel l'élément réducteur est une poudre d'aluminium ou de silicium.

5. Fil fourré selon l'une des revendications 1 à 4, dans lequel les proportions de poudres, entre le trioxyde de molybdène d'une part et le ou les éléments réducteurs d'autre part, sont stoechiométriques ou sur-stoechiométriques, le ou les éléments réducteurs étant en excès jusqu'à 8% au plus.

6. Fil fourré selon l'une des revendications 1 à 5 dans lequel la gaine métallique est fermée de manière étanche, par exemple au moyen d'une agrafe.

7. Fil fourré selon l'une des revendications 1 à 6 dans lequel la gaine métallique est en acier et présente une épaisseur allant de 0,3 à 0,6 mm.

8. Procédé de fabrication d'un acier enrichi en molybdène, comprenant une étape de traitement du bain d'acier liquide consistant en l'introduction dans ledit bain d'un fil fourré selon l'une des revendications 1 à 7, permettant d'obtenir la réduction complète du trioxyde de molybdène dans la gaine métallique.

9. Procédé selon la revendication 8 dans lequel, lors de l'introduction dudit fil fourré dans le bain d'acier liquide, le trioxyde de molybdène contenu dans le fil fourré est complètement réduit au molybdène métallique grâce aux réactions de réductions suivantes :

$$MoO_3 \ + \ 3\,C \ \rightarrow \ [Mo] \ + \ 3\,CO \qquad\qquad éq.\ 1$$

$$MoO_3 \ + \ 2\,Al \ \rightarrow \ [Mo] \ + \ Al_2O_3 \qquad\qquad éq.\ 2$$

$$2\,MoO_3 \ + \ 3\,Si \ \rightarrow \ 2\,[Mo] \ + \ 3\,SiO_2 \qquad\qquad éq.\ 3$$

10. Procédé selon l'une des revendications 8 et 9, dans lequel l'étape de traitement du bain d'acier liquide au moyen dudit fil fourré intervient en poche, en fin d'étape d'élaboration en phase liquide juste avant l'étape de coulée et de solidification.

**Patentansprüche**

1. Fülldraht zum Beladen eines Metallschmelzbades, wobei der Fülldraht eine Metallummantelung und einen Pulverfüllstoff aufweist, **dadurch gekennzeichnet, dass**

   i) der Füllstoff eine Pulvermischung aus einerseits Molybdäntrioxid und andererseits mindestens einem reduzierenden Element,
   ii) dass, das Molybdäntrioxidpulver aus einer Korngrößenfraktion besteht, in der 100% der Partikel eine Größe aufweisen, die kleiner als 1000 $\mu$m ist, und
   iii) dass, das reduzierende Element eine Korngröße von weniger als oder gleich 1500 $\mu$m aufweist;

   und
   dass, die Anteile der Pulver zwischen dem Molybdäntrioxid einerseits und dem reduzierenden Element oder den reduzierenden Elementen andererseits stöchiometrisch oder überstöchiometrisch sind, wobei das reduzierende Element oder die reduzierenden Elemente im Überschuss ist bzw. sind.

2. Fülldraht nach Anspruch 1, wobei das reduzierende Element eine Korngröße von 50 $\mu$m bis 1500 $\mu$m aufweist.

3. Fülldraht nach Anspruch 1 oder 2, wobei das reduzierende Element ein Kohlenstoffpulver ist.

4. Fülldraht nach Anspruch 1 oder 2, wobei das reduzierende Element ein Aluminium- oder Siliziumpulver ist.

5. Fülldraht nach einem der Ansprüche 1 bis 4, wobei die Anteile der Pulver zwischen dem Molybdäntrioxid einerseits und dem reduzierenden Element oder den reduzierenden Elementen andererseits stöchiometrisch oder überstöchiometrisch sind, wobei das reduzierende Element oder die reduzierenden Elemente im Überschuss bis 8 % ist bzw. sind.

6. Fülldraht nach einem der Ansprüche 1 bis 5, wobei die Metallummantelung in dichter Weise verschlossen ist, beispielsweise mittels einer Klammer.

7. Fülldraht nach einem der Ansprüche 1 bis 6, wobei die Metallummantelung aus Stahl ist und eine Dicke von 0,3 bis 0,6 mm aufweist.

8. Verfahren zum Herstellen eines mit Molybdän angereicherten Stahls, umfassend einen Schritt des Behandelns des flüssigen Stahlbades umfassend das Einführen eines Fülldrahtes nach einem der Ansprüche 1 bis 7 in das Bad, um die vollständige Reduktion des Molybdäntrioxids in der Metallummantelung zu erhalten.

9. Verfahren nach Anspruch 8, wobei bei dem Einführen des Fülldrahtes in das geschmolzene Stahlbad das in dem Fülldraht enthaltene Molybdäntrioxid durch die folgenden Reduktionsreaktionen zum metallischen Molybdän vollständig reduziert wird:

$$MoO_3 \ + \ 3\,C \rightarrow [Mo] \ + 3\,CO \qquad \text{Gleichung 1}$$

$$MoO_3 \ + \ 2\,Al \rightarrow [Mo] \ + Al_2O_3 \qquad \text{Gleichung 2}$$

$$2\,MoO_3 \ + \ 3\,Si \rightarrow 2\,[Mo] \ + 3\,SiO_2 \qquad \text{Gleichung 3}$$

10. Verfahren nach einem der Ansprüche 8 und 9, wobei der Schritt des Behandelns des flüssigen Stahlbades mit dem Fülldraht in der Pfanne, spät im Herstellungsprozess des Stahls erfolgt, am Ende des Bearbeitungsschritts in flüssiger Phase vor dem Schritt des Giesens und des Verfestigens.

## Claims

1. Cored wire for charging a molten metal bath, comprising a metallic sheath and a filling material in the form of a powder, **characterized in that**

   i) the filler is a mixture of powders, on the one hand molybdenum trioxide, and, on the other hand, at least one reducing element,
   ii) the molybdenum trioxide powder consists of a granulometric fraction in which 100% of the particles are smaller than 1000 $\mu$m, and
   iii) the reducing element has a particle size less than or equal to 1500 $\mu$m;

   and **in that** the proportions of powders, between the molybdenum trioxide, on the one hand, and the reducing element(s), on the other hand, are stoichiometric or super-stoichiometric, and wherein the reducing element(s) are in excess.

2. Cored wire according to claim 1, wherein the reducing element has a particle size ranging from 50 to 1500 $\mu$m.

3. Cored wire according to claim 1 or 2, wherein the reducing element is a carbon powder.

4. Cored wire according to claim 1 or 2, wherein the reducing element is an aluminum or silicon powder.

5. Cored wire according to one of the claims 1 to 4, wherein the proportions of powders, between the molybdenum trioxide on the one hand, and the reducing element(s), on the other hand, are stoichiometric or super-stoichiometric, or the reducing elements are in excess up to 8% at the most.

6. Cored wire according to one of the claims 1 to 5 wherein the metal sheath is sealed, for example by means of a clip.

7. Cored wire according to one of the claims 1 to 6 wherein the metal sheath is steel and has a thickness of 0.3 to 0.6 mm.

8. Method for manufacturing a molybdenum-enriched steel, comprising a step of treating the liquid steel bath comprising introduction into said bath of a cored wire according to one of the claims 1 to 7, thus allowing complete reduction of the molybdenum trioxide in the metallic sheath.

9. Method according to claim 8 wherein, during the introduction of said cored wire into the molten steel bath, the molybdenum trioxide contained in the cored wire is completely reduced to molybdenum metal through the following reduction reactions:

$$MoO_3 + 3\ C \rightarrow [Mo] + 3\ CO \qquad \text{eq. 1}$$

$$MoO_3 + 2\ Al \rightarrow [Mo] + Al_2O_3 \qquad \text{eq. 2}$$

$$2\ MoO_3 + 3\ Si \rightarrow 2\ [Mo] + 3\ SiO_2 \qquad \text{eq. 3}$$

**10.** Method according to one of the claims 8 and 9, wherein the step of treating the liquid steel bath by means of said cored wire is effected at the end of liquid phase development step just before the step of casting and solidification.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 56029652 A

- WO 2006008450 A

**Littérature non-brevet citée dans la description**

- Smithells Metals Reference Book. 1992